# EUROPÄISCHE PATENTSCHRIFT

(11) **EP 2 936 094 B1**
(45) Veröffentlichungstag und Bekanntmachung des Hinweises auf die Patenterteilung: **04.04.2018**
(21) Anmeldenummer: 13802601.8
(22) Anmeldetag: 06.12.2013
(51) Int. Cl.: G01K 7/18, G01K 15/00

(54) **SENSORELEMENT, THERMOMETER SOWIE VERFAHREN ZUR BESTIMMUNG EINER TEMPERATUR**
SENSOR ELEMENT, THERMOMETER AND METHOD FOR DETERMINING A TEMPERATURE
ÉLÉMENT CAPTEUR, THERMOMÈTRE ET PROCÉDÉ DE DÉTERMINATION D'UNE TEMPÉRATURE

(30) Priorität: 18.12.2012 DE 102012112574
(43) Veröffentlichungstag der Anmeldung: 28.10.2015
(73) Patentinhaber: Endress+Hauser Wetzer GmbH+Co. KG, 87484 Nesselwang (DE)
(72) Erfinder: SEEFELD, Peter, 87459 Pfronten (DE)
(74) Vertreter: Andres, Angelika Maria
(86) Internationale Anmeldenummer: PCT/EP2013/075788
(87) Internationale Veröffentlichungsnummer: WO 2014/095423

(56) Entgegenhaltungen:
- WO-A1-2012/046638
- DE-B2- 2 436 911

## Beschreibung

Die Erfindung bezieht sich auf ein Sensorelement, ein Thermometer, auf ein Verfahren zur Bestimmung einer Temperatur, sowie auf die Verwendung des Verfahrens zur Validierung, Kalibrierung, Justierung und/oder Eichung eines Thermometers.
Derartige Sensorelemente, die beispielsweise zur Erfassung einer Temperatur verwendet werden und beispielsweise aus einem temperaturabhängigen Widerstand bestehen, sind aus einer Vielzahl von Anwendungen, insbesondere der Prozessautomatisierungstechnik bekannt geworden.
So ist beispielsweise aus der Patentanmeldung DE 2251969 A eine Vorrichtung zur Temperaturkonstanthaltung bekannt geworden, bei der ein Transistor als Heizelement und eine Diode mit temperaturabhängigen Eigenschaften aus einer Substanz mit einem anormalen Sprung der elektrischen Leitfähigkeit vorgeschlagen wird.
Ferner ist aus der Offenlegungsschrift DE 2300199 A eine Pulvermasse bestehend aus Widerstandoxiden bekannt geworden.
Aus der Offenlegungsschrift DE 2424468 A ist eine temperaturkompensierte Thermorelaiseinrichtung bekannt geworden, bei der bei einer vorgegebenen Übergangstemperatur eine plötzliche Impedanzveränderung auftritt.
Aus der Patentschrift DE 2436911 B ist ferner ein Verfahren zur Herstellung von Dünnschichtheißleiterelementen auf der Basis von Vanadiumoxid bekannt geworden, bei dem auf ein geeignetes Substrat eine dünne Schicht aufgebracht wird, die überwiegend aus einem Vanadiumoxidmaterial besteht, wobei das Vanadiumoxidmaterial ferner mit Fremdatomen dotiert wurde.
Prinzipiell ist es bei der Temperaturmessung ein Problem eine verlässliche Temperaturmessung zu gewährleisten, bei der beispielsweise keine altersbedingten Drift-Effekte auftreten. Zudem ist es ein notorisches Problem bei der Messung einer Temperatur den Messaufnehmer, das sogenannte Temperatursensorelement zu validieren, justieren, kalibrieren und/oder zu eichen. Insbesondere in der Prozessautomatisierungstechnik sind derartige Sensorelemente wie bspw. in Thermometern oder allgemein Vorrichtungen zur Bestimmung einer Temperatur oftmals derart in den Prozess integriert, dass ein Ausbau einer derartigen Vorrichtung oftmals nur mit größerem Aufwand möglich ist oder besondere Vorrichtungen, wie beispielsweise Einbauarmaturen erfordert, die zu diesem Zweck überhaupt geeignet sind. Bspw. befassen sich die Offenlegungsschrifte WO 2012/046638 A1 und DE 102010040039 A1 mit der bei der Justierung, Kalibrierung oder Eichung auftretenden Problemstellungen bei Thermometern.
Ausgehend von dieser aus dem Stand der Technik bekannten Problemstellungen ist es Aufgabe der vorliegenden Erfindung eine langzeitstabile Kalibrierung, Validierung, Justierung und/oder Eichung auf besonders einfache insbesondere kompakte Weise zu ermöglichen.
Die Aufgabe wird erfindungsgemäß durch ein Sensorelement, ein Thermometer umfassend ein Sensorelement, ein Verfahren zur Bestimmung einer Temperatur und die Verwendung des Verfahrens zur Validierung, Kalibrierung, Justierung und/oder Eichung eines Thermometers gelöst.

Hinsichtlich des Sensorelements wird die Aufgabe durch ein Sensorelement gemäss Anspruch 1 gelöst, welches Sensorelement eine erste und eine zweite Messstrecke umfasst, wobei die erste Messstrecke über ein erstes Segment aus einem ersten Material verläuft und die zweite Messstrecke zumindest teilweise über dieses aus dem ersten Material bestehende erste Segment verläuft, wobei die zweite Messstrecke zudem über ein zweite Segment verläuft, welches aus einem zweiten Material besteht, welches zweite Material sich von dem ersten Material unterscheidet.
Das Sensorelement kann bestimmungsgemäß beispielsweise zur Temperaturmessung oder zur Messung einer anderen chemischen und/oder physikalischen Größe verwendet werden. Zur Bestimmung dieser Prozessgröße kann dabei die erste Messstrecke, welche zumindest abschnittsweise aus einem ersten Material besteht verwendet werden. Beispielsweise kann die erste Messstrecke über entsprechende (Signal-)Abgriffe, die zum Abgreifen eines Messsignals dienen, definiert werden. Ebenso kann die zweite Messtrecke durch entsprechende (Signal-)Abgriffe gebildet werden. Vorzugsweise wird dabei die erste und die zweite Messstrecke derart gebildet, dass sich die erste und die zweite Messstrecke zumindest teilweise überlappen. Von besonderem Vorteil ist dabei, dass die zweite Messstrecke zumindest teilweise über das erste Segment als auch über das zweite Segment, welches aus einem gegenüber dem ersten Material verschiedenen Material besteht, verläuft. Dadurch kann eine besonders kompakte Sensorbauform erreicht werden. Insbesondere ist nur eine geringe Anzahl an (Signal-)Abgriffen erforderlich.
In einer Ausführungsform des Sensorelements handelt es sich bei dem ersten Material um Platin beziehungsweise ein platin-haltiges Material. Es kann auch ein anderes Material verwendet werden, das beispielsweise einen temperaturabhängigen Widerstandswert aufweist.
In einer weiteren Ausführungsform des Sensorelements handelt es sich bei dem zweiten Material um ein Übergangsmetall, vorzugsweise Vanadium oder ein Vanadiumoxid, beziehungsweise ein Übergangsmetall enthaltendes, vorzugsweise ein Vanadium- oder ein Vanadiumoxid enthaltendes, Material. Bei dem zweiten Material kann es sich allgemein um ein Material handeln, das in Abhängigkeit der Temperatur eine sich ändernde physikalische Eigenschaft, wie beispielsweise elektrische Eigenschaften, wie insbesondere elektrische Leitfähigkeit aufweist. Besonders geeignet für ein derartigen Verwendungszweck sind dabei vanadiumhaltige Materialien, insbesondere Vanadiumoxide wie Vanadium-II-oxid, Vanadium-III-oxid, Vanadium-IV-oxid und/oder Vanadium-V-oxid.
In einer weiteren Ausführungsform des Sensorelements verlaufen die erste und die zweite Messstrecke dabei auf demselben Substrat. Bei dem Substrat handelt es sich um einen Träger auf den die Messtrecken beispielsweise aufgebracht sind. Bei den Messstrecken kann es sich auch um auf das Substrat aufgebrachte Strukturen handeln. Es ist zudem auch möglich, Messstrecken nicht nur an der Oberfläche des Substrat verlaufen, sondern auch durch das Substrat hindurch oder zumindest teilweise durch das Substrat hindurch verlaufen.
In einer weiteren Ausführungsform des Sensorelements handelt es sich bei dem ersten Segment und bei dem zweiten Segment um eine Dünnfilmschicht und/oder eine Dickfilmschicht. Diese Schichten weisen eine Schichtdicke vom Nanometerbereich bis in den Mikrometerbereich auf.
In einer weiteren Ausführungsform des Sensorelements grenzen das erste und das zweite Segment aneinander an. Erfindungsgemäss erfährt das Material aus dem das zweite Segment besteht bei einer vorgegebenen Temperatur eine Phasenumwandlung. Der Effekt der Phasenumwandlung kann beispielsweise mit der Änderung einer physikalischen Eigenschaft, wie beispielsweise der elektrischen Leitfähigkeit des Materials, aus dem das zweite Segment besteht, einhergehen. Unter Ausnutzung der Änderung dieser physikalischen Eigenschaft des Materials kann somit eine sich ändernde Eigenschaft dieses zweiten Materials über abtasten, wie beispielsweise beaufschlagen der zweiten Messstrecke mit einem Messsignal, erkannt werden. Dies kann beispielsweise parallel zum Beaufschlagen der ersten Messstrecke mit einem Messsignal, insbesondere mit demselben Messsignal, stattfinden. Zu diesem Zweck ist lediglich ein zusätzlicher Abgriff über dem zweiten Segment erforderlich. Beispielsweise kann ein erster und ein zweiter Abgriff an dem ersten Segment vorgesehen sein und ein dritter Abgriff an dem zweitem Segment vorgesehen sein. Beispielsweise eine erste Messstrecke zwischen dem ersten und dem zweiten Abgriff gebildet werden während eine zweite Messstrecke zwischen dem ersten und dritten beziehungsweise dem zweiten und dritten Abgriff gebildet wird.
In einer weiteren Ausführungsform des Sensorelements geht durch die Phasenumwandung des zweiten Materials, das zweite Material von einem Zustand mit einer ersten elektrischen Leitfähigkeit in einem Zustand mit einer zweiten elektrischen Leitfähigkeit über. Die Änderung der elektrischen Leitfähigkeit kann erfasst und zur Direktion der Phasenumwandlung genutzt werden. Aus der Phasenumwandlung wiederum kann auf die vorliegende Temperatur geschlossen werden. Dadurch steht ein Vergleichstemperaturwert, d. h. ein Referenzwert zur Verfügung, um die von dem Sensorelement gelieferten Messsignale zu justieren, kalibrieren und/oder zu eichen. Beispielsweise kann durch die Erfassung der Phasenwandlung über die zweite Messstrecke die Verlässlichkeit der über die erste Strecke erhaltenen Messsignale überprüft und gegebenenfalls korrigiert werden. Erfindungsgemäss geht das zweite Material durch die Phasenumwandlung von einem Zustand, in welchem das zweite Material elektrisch im Wesentlichen isoliert in einen elektrisch leitfähigen Zustand über. Die Änderungen der elektrischen Leitfähigkeit kann, wie erwähnt, zur Auswertung herangezogen werden.

In einer weiteren Ausführungsform des Sensorelements wird die erste Messstrecke durch einen ersten Widerstandsabgriff und die zweite Messstrecke durch einen zweiten Widerstandsabgriff gebildet. Die Widerstandsabgriffe können dabei, wie bereits geschildert, an dem ersten Segment und an dem zweiten Segment vorgesehen sein. Diese Widerstandsabgriffe können über Verbindungsleitungen mit einer Auswerteschaltung beispielsweise einer Auswerteelektronik eines Messgeräts, wie beispielsweise eines Thermometers, verbunden sein.
In einer weiteren Ausführungsform des Sensorelements ist eine dritte Messstrecke vorgesehen, die zumindest teilweise über die erste und/oder die zweite Messstrecke beziehungsweise das erste und/oder das zweite Segment verläuft, wobei die dritte Messstrecke zudem über ein drittes Segment verläuft, welches dritte Segment aus einem dritten Material besteht, welches dritte Material sich von dem ersten und/oder zweiten Material unterscheidet. Durch die dritte Messstrecke kann somit ein weiterer Kalibrierungspunkt, Justierungspunkt, Validierungs- und/oder Eichpunkt geschaffen werden. Dadurch, dass die Messstrecken sich zumindest teilweise überlappen, kann somit durch eine Abtastung der verschiedenen Messstrecken, d. h. durch das Beaufschlagen der Messstrecken mit einem Messsignal, ermittelt werden, in welchem Temperaturbereich beispielsweise die momentan in dem Prozess herrschende Temperatur liegt.
In einer weiteren Ausführungsform des Sensorelements unterscheidet sich das dritte Segment hinsichtlich der Dotierung des dritten Materials, der Stärke des Segments und/oder der Breite des dritten Segments von dem ersten und/oder dem zweiten Segment beziehungsweise dem ersten und/oder dem zweiten Material.
In einer weiteren Ausführungsform des Sensorelements sind die Segmente, d.h. das erste, das zweite und/oder das dritte Segment nebeneinander im Wesentlichen in einer Ebene aneinander angrenzend angeordnet. Die Segmente können dabei beispielsweise auf der Oberfläche eines Substrats angeordnet sein.
In einer weiteren Ausführungsform des Sensorelements sind die Segmente, d.h. das erste, das zweite und/oder das dritte Segment übereinander, vorzugsweise aneinander angrenzend, angeordnet. Die Segmente können dabei also übereinanderliegende Schichten bilden. Ferner ist es möglich, dass die Segmente sowohl nebeneinander als auch übereinander angeordnet sind. Somit kann eine Vielzahl von Messstrecken und/oder Abgriffmöglichkeiten von Messsignalen an dem Sensorelement gebildet werden. Die verschiedenen Segmente können auch über elektrisch leitfähige Verbindungsleitungen miteinander verbunden sein, ohne direkt aneinander anzugrenzen. Hinsichtlich des Thermometers wird die Aufgabe durch ein Thermometer umfassend ein Sensorelement nach einer der vorherigen Ausführungsformen gelöst. Wie bereits erwähnt, kann ein derartiges Thermometer über Anschlussleitungen, die zum Anschließen des Sensorelements an einer Mess- und/oder Betriebselektronik dienen, umfassen. Ferner kann das Thermometer ein Schutzrohr fassen, in welchem das Sensorelement angeordnet ist. Das Sensorelement kann auch Bestandteil eines Messeinsatzes sein, welcher in das Schutzrohr eingeführt werden kann.

Hinsichtlich des Verfahrens wird die Aufgabe durch ein Verfahren zur Bestimmung einer gemäss Anspruch 16 gelöst, wobei einer ersten Messstrecke über ein erstes Segment verläuft, welches erste Segment aus einem ersten Material besteht, wobei ein zweite Messstrecke vorgesehen ist, die zumindest teilweise über das erste Segment verläuft und wobei die zweite Messstrecke zudem über ein zweites Segment verläuft, welcher aus einem zweiten Material besteht, dass sich von dem ersten Material unterscheidet, wobei ein erstes Messsignal über der ersten Messstrecke abgegriffen wird und wobei ein zweites Messsignal über der zweiten Messstrecke abgegriffen wird. Das Verfahren kann zur Ermittlung der Phasenübergangs und somit zur Ermittlung der Temperatur werden. Da diese Temperatur bei einem Bekannten und vor allen Dingen reproduzierbaren Temperaturwert stattfindet, kann diese Temperatur zur Justierung, Kalibrierung und/oder Eichung des über die erste Messstrecke abgegriffenen Messsignals verwendet werden. Die erste Messstrecke dient also allgemein beispielsweise dazu, ein eine Temperatur entsprechendes Messsignal bereitzustellen. Die erste Messstrecke besteht aus diesem Zweck wie bereits erläutert vorzugsweise aus einem temperaturabhängigen Widerstand. Zur Erzeugung des ersten und des zweiten Messsignals kann die erste und die zweite Messstrecke mit einem entsprechenden Messsignal beaufschlagt werden. Die erste und die zweite Messstrecke befinden sich dabei vorzugsweise auf demselben Substrat.

Hinsichtlich der Verwendung wird die Aufgabe durch die Verwendung des Verfahrens zur Validierung, Kalibrierung, Justierung und/oder Eichung eines Thermometers gelöst.

Das vorgeschlagene Sensorelement kann somit zu Selbstüberwachungszwecken eines Thermometers verwendet werden. Es wird dadurch eine Temperaturüberwachungsvorrichtung ermöglicht, die das vorgeschlagene Sensorelement umfasst. Das Sensorelement kann dabei aus mehreren Dünnfilmbeschichtungen, die eine Stärke zwischen 0,5µm und 20µm aufweisen bestehen. Diese Dünnfilmbeschichtungen können auf einem dielektrischen Substrat wie beispielsweise einer Aluminiumoxidhaltigen Keramik oder einem sogenannten Low Temperature Compound oder einem High Temperature Compound ausgeprägt werden. Die Schichten grenzen dabei vorzugsweise unmittelbar an ihre jeweiligen Ränder an, beziehungsweise überlappen sich.

Es wird auch vorgeschlagen, dass sich dabei dotierte und undotierte Dünnfilmschichten aus Vanadiumoxiden überlappen, wobei mindestens eine der Vanadiumoxid-haltigen Dünnfilmschicht auf demselben Substrat mit wenigstens einer anderen metallischen Dünnfilmschicht im elektrisch leitfähigen Kontakt steht. Ferner können auch eine oder mehrere erste Messstrecken aus einem temperaturabhängigen Widerstandselement auf demselben Substrat vorgesehen sein. An diesem Dünnfilmsegment beziehungsweise an diese Dünnfilmsegmente können Dünnfilmsegmente aus Vanadiumoxid leitfähig mittels unmittelbaren Schichtkontakts angrenzen. Dabei kann das Dünnfilmsegment auf dem sich die erste Messstrecke befindet ebenso wie das Dünnfilmsegment auf dem sich die zweite Messstrecke befindet mit zwei oder mehreren Anschlüssen elektrisch kontaktiert werden, wobei wenigstens ein Abgriff zur Bestimmung des elektrischen Widerstands sich über das erste Dünnfilmsegment erstreckt, welches einen temperaturabhängigen Widerstand aufweist und wobei wenigstens ein weiterer Abgriff an dem zweiten Dünnfilmsegment vorgesehen ist, welches bei einer vorgegebenen Temperatur einen Phasenübergang erfährt.

Bei den Abgriffen kann es sich beispielsweise um elektrische Kontakte handeln, die vorzugsweise an den Rand der Substrate beziehungsweise an den Rand der ersten beziehungsweise der zweiten Messstrecke beziehungsweise an den Rand der ersten und/oder des zweiten Segments geführt sind.

Die erste Messstrecke ist dabei bevorzugt als mäanderförmige Messstrecke beispielsweise in Form einer auf das Substrat aufgebrachten Struktur ausgebildet. Das Substrat kann eine Vorder- und eine Rückseite aufweisen, wobei auf der Rückseite des vorzugsweise dielektrischen Substrats mehrere stufenförmig übereinander liegende Vadiumoxidschichten mit unterschiedlicher Dotierung angeordnet sind. Anstelle der unterschiedlichen Dotierung kann auch eine unterschiedliche Stärke und/oder Breite der Vanadiumoxidschichten vorgesehen sein. Durch diesen schicht- beziehungsweise stufenförmigen Aufbau kann ein Messsignal von zirka 40 bis 10 000 Ohm vorliegen, so dass bei der jeweiligen Phasenübergangstemperaturen eine abgestufte Widerstandsveränderung auftritt.

Anstelle des schichtweisen Aufbaus kann auch ein nebengeordneter Aufbau der Segmente erfolgen, bei der auf der Rückseite des dielektrischen Substrats mehrere parallel geschaltete Schichten beispielsweise unterschiedliche Dotierung nebeneinander angeordnet sind. Diese Schichten können beispielsweise randständig kontaktiert sein, sodass bei einer Temperaturveränderung über die jeweiligen Phasenübergangstemperaturen hinweg eine deutliche stufenförmige Zubeziehungsweise Abnahme des resultierenden Gesamtwiderstand der Anordnung erfolgt.

Vanadiumoxid beziehungsweise Vanadiumoxiddünnfilm bezeichnet ein Vanadiumoxid beziehungsweise Vandiumoxidfilm mit einem bestimmten stöchiometrischen Vanadium zu Sauerstoffverhältnis. Ein derartiges Material weist undotiert bei Erhitzung von tiefen Temperaturen auf einen Bereich von zirka 60°C eine kristallstrukturbedingte Umwandlung von einem dielektrischen quasi halbleitenden Zustand in einen Zustand mit elektrischer Leitfähigkeit auf, womit eine Widerstandsänderung verbunden ist. Beim Abkühlvorgang von Temperaturen über 60°C tritt der umgekehrte Vorgang auf, der eine Widerstandserhöhung hervorruft. Mittels Dotierungszuschlägen können unterschiedliche Umwandlungstemperaturen erreicht werden. Beispielsweise kann eine Dotierung mittels Wolfram, Niob, Molybden, Phosphor, Fluorid erfolgen, um die Umwandlungstemperatur auf unter 60°C zu verschieben. Ferner kann eine Dotierung mit Titan, Zinn, Aluminium oder Gallium erfolgen, um die Umwandlungstemperatur auf über 60°C zu verschieben. Dabei sind auch Dotierungen und Mischungen von Dotierungen verschiedener der genannten Elemente möglich.

Durch das vorgeschlagene Sensorelement beziehungsweise das Thermometer, welches ein derartiges Sensorelement umfasst, kann eine in-Situ-Überwachung der Widerstandtemperaturmessung erfolgen. Ferner können über einen Messbereich verteilt mehrere Referenztemperaturen vorgesehen sein, die durch unterschiedliche Dotierungszuschläge und/oder Dotierungsverhältnisse festgelegt werden können. Eine derartige miniaturisierte beziehungsweise halbminiaturisierte Bauform kann in heutzutage übliche Thermometerarmaturen eingesetzt werden.

Die Erfindung wird anhand der nachfolgenden Zeichnungen näher erläutert. Es zeigt:
Fig. 1: eine schematische Darstellung eines Sensorelements in einer Ausführungsform der vorgeschlagenen Erfindung,
Fig. 2: eine weitere Ausführungsform eines Sensorelements gemäß der vorgeschlagenen Erfindung,
Fig. 3: eine weitere Ausführungsform eines Sensorelements gemäß der vorgeschlagenen Erfindung.
Fig. 4: einen Querschnitt durch eine Ausführungsform des Sensorelements gemäß der vorgeschlagenen Erfindung,
Fig. 5: einen Querschnitt durch eine weitere Ausführungsform des Sensorelements gemäß der vorgeschlagenen Erfindung,
Fig. 6: eine schematische Darstellung einer Ausführungsform gemäß der vorgeschlagenen Erfindung, in einer Draufsicht, und
Fig. 7: ein schematische Darstellung mehrere Segmente zw. zwischen einem ersten und einem zweiten Abgriff zum Abgreifen eines Messsignals.

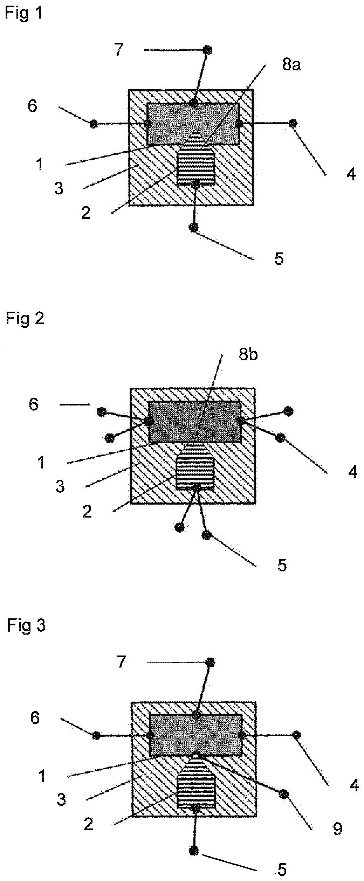

Fig. 1 zeigt eine erste und eine zweite auf einem Substrat 3 aufgebrachte Messstrecken. Zu diesem Zweck ist ein erstes Dünnfilmsegment 1 und ein zweites Dünnfilmsegment 2 auf das Substrat 3 aufgebracht. Diese beiden Dünnfilmsegmente 1, 2 grenzen unmittelbar aneinander an beziehungsweise überlappen sich. Die erste Messstrecke verläuft dabei vollständig über das erste Dünnfilmsegment 1 von einem ersten zu einem zweiten Abgriff 4, 6, die mit dem ersten Dünnfilmsegment 1 verbunden sind. Zwischen diesem ersten und dem zweiten Abgriff 4, 6 befindet sich also die erste Messstrecke. Die zweite Messstrecke befindet sich zwischen einem dritten und einem vierten Abgriff 7, 5 auf dem Substrat 3. Der dritte Abgriff 7 ist ebenfalls mit dem ersten Dünnfilmsegment 1 verbunden, während der vierte Abgriff 5 auf dem zweiten Dünnfilmsegment 2 vorgesehen ist. Das Material aus dem das erste Dünnfilmsegment 1 besteht ist gemäß dem vorliegenden Ausführungsbeispiel Platin während das Material aus dem das zweite Dünnfilmsegment 2 besteht vorzugsweise aus Vanadium beziehungsweise Vanadiumoxid besteht. Aufgrund der bekannten Phasenübergangstemperatur des zweiten Dünnfilmsegments 2 ist es möglich im Falle beispielsweise eines sprunghaften Anstiegs der elektrischen Leitfähigkeit entlang der zweiten Messstrecke eine Referenztemperatur nämlich die Phasenübergangstemperatur des zweiten Dünnfilmsegments 2 als Bezugspunkt zur Validierung, Justierung, Kalibrierung und/oder Eichung des vermittels der ersten Messstrecke erhaltenen Temperatursignals zu erhalten. Bei dem Substrat 3 kann es sich beispielsweise um ein Aluminiumoxid enthaltende Keramik handeln.

Beispielsweise kann zur Herstellung eines derartigen Sensorelements vorgesehen sein, zunächst das erste Dünnfilmsegment 1 auf das Substrat 3 aufzubringen und anschließend das zweite Dünnfilmsegment 2 auf das Substrat 3 aufzubringen und dabei das erste Dünnfilmsegment 1 zumindest abschnittsweise zu überlappen. Dieser ist durch Bezugszeichen 8a in Figur 1 gekennzeichnet.

Fig. 2 zeigt eine Ausführungsform des vorgeschlagenen Sensorelements, wobei die erste Messstrecke durch einen Vierpunktmesssignalabgriff 4, 6 kontaktiert ist. Die zweite Messstrecke kann dabei teilweise zwischen dem ersten Abgriff und dem zweiten Abgriff der Vierpunktmessanordnung 4, 6 gebildet werden. Ebenso wie in der Ausführungsform gemäß Fig. 1 ist dabei das erste Dünnfilmsegment 1 in einem elektrisch leitfähigen Kontakt mit dem zweiten Dünnfilmsegment 2. In der Ausführungsform gemäß Fig. 2 kann eine Validierung, Justierung, Kalibrierung und/oder Eichung der Messsignale des Sensorelements bereits durch das Vorsehen von lediglich drei Signalabgriffen 4, 6, 5an dem Sensorelement durchgeführt werden.

Zur Herstellung eines Sensorelements wie es beispielsweise in Fig. 2 dargestellt ist kann zunächst das zweite Dünnfilmsegment 2, das bei einer vorgegebenen und bekannten Temperatur ein Phasenübergang erfährt, zuerst auf das Substrat 3 aufgebracht werden und anschließend das erste Dünnfilmsegment 1 auf das Substrat 3 aufgebracht werden, wobei das erste Dünnfilmsegment 2 derart auf das Substrat 3 aufgebracht wird, dass es das zweite Dünnfilmsegment 2 zumindest abschnittsweise überlappt. Dieser Bereich ist in Figur 2 mit Bezugszeichen 8b gekennzeichnet.

Fig. 3 zeigt eine weitere Ausführungsform der vorgeschlagenen Erfindung bei der das erste und das zweite Dünnfilmsegment 1, 2 sich nicht überlappen jedoch randständig miteinander verbunden sind. Zudem kann wie beispielsweise in Fig. 3 gezeigt, ein Abgriff 9 zum Abgreifen eines Messsignals über der zweiten Messstrecke oder über der ersten Messstrecke an einem Kontaktpunkt zwischen dem ersten und dem zweiten Dünnfilmsegment 1, 2 vorgesehen sein. Ein weiterer Kontaktpunkt 5 kann beispielsweise gemäß dem Ausführungsbeispiel in Fig. 3 insbesondere an einem gegenüberliegenden Ende des zweiten Dünnfilmsegments 2 vorgesehen sein. Weitere Abgriffe 4, 6, 7 können beispielsweise an dem ersten Dünnfilmsegment 1 vorgesehen sein, um ein Messsignal mit dem, das erste Dünnfilmsegment 1 beaufschlagt wird abzugreifen.

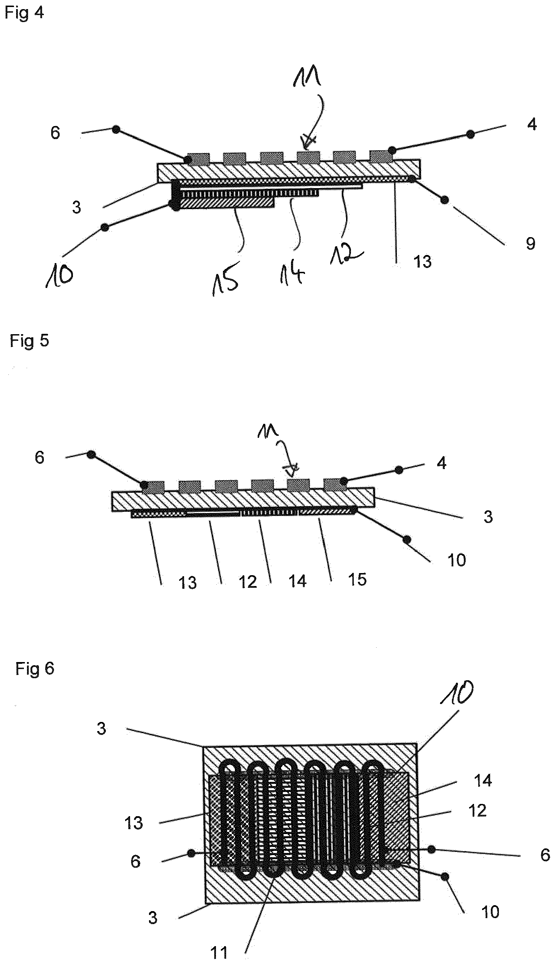

Fig. 4 zeigt einen Querschnitt durch eine weitere Ausführungsform des Sensorelements gemäß der vorgeschlagenen Erfindung. Dabei befindet sich die erste Messstrecke auf einer Vorderseite des Substrats 3 während sich eine zweite Messstrecke auf der, der Vorderseite gegenüberliegende Seite des Substrats 3, d. h. der Rückseite des Substrats 3 angeordnet ist. Die ersten Messtrecken können dabei wie in Fig. 4 gezeigt aus einem mäanderförmigen auf der Vorderseite angebrachten Messwiderstands zwischen den Abgriffen 4 und 6 bestehen, während auf der Rückseite des Substrats 3 mehrere Schichten 12, 13, 14, 15 von Dünnfilmsegmenten übereinander angeordnet sind. Die Schichten 12, 13, 14, 15 sind dabei, wie in Fig. 4 gezeigt über einen leiterbahn-artigen Kontakt 10 elektrisch leitfähig miteinander verbunden. Die Schichten 12, 13, 14, 15 können dabei vorzugsweise aus einem Vanadiumoxid mit unterschiedlicher Dotierung bestehen, eine unterschiedliche Stärke oder Breite aufweisen, so dass bei dem jeweiligen Umwandlungspunkt der jeweiligen Schicht 12, 13, 14, 15 eine abgestufte Widerstandsveränderung zwischen dem Kontaktpunkt 9 auf der Schicht 13 und einem zweiten (leiterbahn-artigen) Abgriff 10 erfolgt. Vorzugsweise weist gem. dem Ausführungsbeispiel in Figur 4 die unterste Schicht 13 die niedrigste Phasenübergangstemperatur auf, während die über der Schicht 13 liegenden Schichten 12, 14, 15 sukzessive höhere Phasenübergangstemperaturen aufweisen.

Anstelle des punktförmigen Abgriffs 9 an der Schicht 13 kann ebenfalls ein leiterbahn-artiger Abgriff, der sämtliche Schichten 12, 13, 14, 15 kontaktiert vorgesehen sein.

Die erste und die zweite Messtrecke überlappen sich hierbei nicht. Vielmehr ist neben der ersten Messstrecke, bspw. auf der Vorderseite des Substrats, eine zweite Messtrecke, bspw. auf der Rückseite des Substrats oder neben der ersten Messstrecke auf der Vorderseite des Substrats, vorgesehen. Die zweite Messstrecke besteht dabei aus Segmenten wie bspw. Schichten die einen Phasenübergang bei unterschiedlichen Temperaturen aufweisen. Diese Segmente grenzen vorzugsweise, wie in Figur 4 oder Figur 5 gezeigt, aneinander an, liegen also bevorzugt nebeneinander bzw. übereinander, so dass ein stufenförmiger Verlauf bspw. des Widerstands oder einer anderen Messgröße zwischen einem ersten und einem zweiten Abgriff in Abhängigkeit der Temperatur bzw. des durchlaufenen Temperaturbereichs entsteht.

Fig. 5 zeigt einen Querschnitt gemäß einer weiteren Ausführungsform des Sensorelements bei der ebenfalls auf der Vorderseite des Substrats 3 ein mäandrierendes Widerstandselement 11 aufgebracht ist, wobei der Rückseite des Substrats 3 nebeneinander angeordnete Dünnfilmsegmente 12, 13, 14, 15 vorgesehen sind, die über einen elektrischen Abgriff 10 mit einem Messsignal 10 abgetastet werden können. Über den leiterbahn-artigen Abgriff 10 sind die Segmente 12, 13, 14, 15 miteinander verbunden. Der leiterbahn-artige Abgriff 110 wiederum ist über die Segmente 12, 13, 14, 15 von einem zweiten leiterbahn-artigen Abgriff getrennt. In Abhängigkeit der vorliegenden Temperatur bzw. der daher vorliegenden Phase der Segmente 12, 13, 14, 15 ergibt sich damit eine sich ändernde elektrische Leitfähigkeit zwischen den Abgriffen 10.

Fig. 6 zeigt eine weitere Ausführungsform des Sensorelements in einer Draufsicht auf die Vorderseite des Substrats 3, wobei zur Veranschaulichung auch die auf der Rückseite angeordneten Segmente 12, 13, 14, 15 dargestellt sind. Auf der Rückseite des dielektrischen Substrats 3 sind mehrere parallel geschaltete Dünnfilmschichten unterschiedlicher Dotierungen nebeneinander angeordnet, die jeweils randständig miteinander über einen leiterbahn-artigen Abgriff kontaktiert sind, so dass bei einer Temperaturveränderung über die jeweilige Umschlagstemperatur, d.h. Phasenübergangstemperatur, hinaus eine deutliche stufenförmige Zu- beziehungsweise Abnahme des resultierenden Gesamtwiderstands über die Dünnfilmschichten zu verzeichnen ist.

Auch gemäß diesem Ausführungsbeispiel verlaufen die erste Messtrecke (über die meandrierende Leiterbahn 11) und die zweite Messstrecke (zwischen den durch die Segmente 12, 13, 14, 15 getrennten Abgriffen 10) getrennt voneinander.

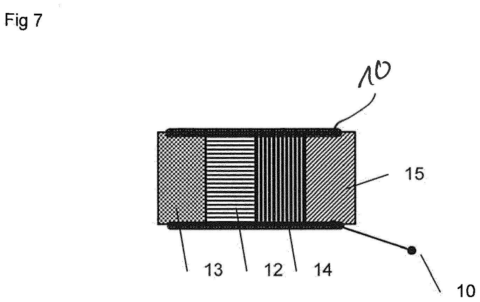

Figur 7 zeigt einen Querschnitt durch mehrere nebeneinander zwischen einem ersten und einem zweiten leiterbahn-artigen Abgriff 10 angeordnete Segmente 12, 13, 14, 15. Die Segmente 12, 13, 14, 15 bestehen jeweils aus einem Material die bei einer bestimmten Temperatur einen Phasenübergang erfahren in dessen Folge sich die elektrischen Eigenschaften des jeweiligen Materials ändert. Dabei unterscheiden sich die Temperaturen bei denen der Phasenübergang in einem Segment auftritt vorzugsweise voneinander, so dass ein Stufenförmiger verlauf bspw. des Widerstands oder einer anderen elektrischen Größe des zwischen dem ersten und dem zweiten Abgriff 10 abgegriffenen Messsignals erfolgt.

### Bezugszeichenliste

- 1: Erste Dünnfilmschicht
- 2: Zweite Dünnfilmschicht
- 3: Substrat
- 4: Erster Abgriff
- 5: Dritter Abgriff
- 6: Zweiter Abgriff
- 7: Vierter Abgriff
- 8a: Erste Dünnfilmschicht über zweiter Dünnfilmschicht
- 8b: Zweite Dünnfilmschicht über erster Dünnfilmschicht
- 9: Punktförmiger Abgriff
- 10: Leiterbahn-artiger Abgriff
- 11: Meandrierende Leiterbahn
- 12: Erstes Segment (vorzugsweise Dünnfilmschicht)
- 13: Zweites Segment (vorzugsweise Dünnfilmschicht)
- 14: Drittes Segment (vorzugsweise Dünnfilmschicht)
- 15: Viertes Segment (vorzugsweise Dünnfilmschicht)

## Patentansprüche

1. Sensorelement, wobei das Sensorelement eine erste und eine zweite Messstrecke umfasst,
wobei die erste Messtrecke über ein erstes Segment (1) aus einem ersten Material verläuft und die zweite Messstrecke zumindest teilweise über dieses aus dem ersten Material bestehende erste Segment (1) verläuft,
wobei die zweite Messtrecke zudem über ein zweites Segment (2) verläuft, welches aus einem zweiten Material besteht, welches zweite Material sich von dem ersten Material unterscheidet, wobei das Material, aus dem das zweite Segment (2) besteht, bei einer vorgegebenen Temperatur eine Phasenumwandlung erfährt, und
wobei durch die Phasenumwandlung das zweite Material von einem Zustand in welchem das zweite Material elektrisch im Wesentlichen isoliert in einen elektrisch leitfähigen Zustand übergeht.

2. Sensorelement nach einem der vorherigen Ansprüche,
wobei es sich bei dem ersten Material um Platin bzw. ein Platin enthaltendes Material handelt.

3. Sensorelement nach einem der vorherigen Ansprüche,
wobei es sich bei dem zweiten Material um ein Übergangsmetall, vorzugsweise Vanadium oder ein Vanadiumoxid, bzw. ein ein Übergangsmetall enthaltendes, vorzugsweise ein Vanadium oder ein Vanadiumoxid enthaltendes, Material handelt.

4. Sensorelement nach einem der vorherigen Ansprüche,
wobei die erste und die zweite Messstrecke auf demselben Substrat (3) verlaufen.

5. Sensorelement nach einem der vorherigen Ansprüche,
wobei es sich bei dem ersten Segment (1) und bei dem zweiten Segment (2) um eine Dünnfilmschicht oder eine Dickfilmschicht handelt.

6. Sensorelement nach einem der vorherigen Ansprüche,
wobei das erste und das zweite Segment (1, 2) aneinander angrenzen.

7. Sensorelement nach einem der vorherigen Ansprüche, wobei die erste Messstrecke durch einen ersten Widerstandsabgriff (4, 6) und die zweite Messstrecke durch einen zweiten Widerstandsabgriff (5, 7 ,9) gebildet wird.

8. Sensorelement nach einem der vorherigen Ansprüche, wobei eine dritte Messstrecke vorgesehen ist, die zumindest teilweise über die erste und/oder die zweite Messtrecke bzw. das erste und/oder das zweite Segment (12, 13) verläuft,
wobei die dritte Messstrecke zudem über zumindest ein drittes Segment (14,15) verläuft, welches dritte Segment (14, 15) aus einem dritten Material besteht, welches dritte Material sich von dem ersten und/oder zweiten Material unterscheidet.

9. Sensorelement nach einem der vorherigen Ansprüche, wobei sich das dritte Segment (14, 15) hinsichtlich der Dotierung des dritten Materials, seiner Stärke und/oder seiner Breite von dem zweiten Segment unterscheidet.

10. Sensorelement nach einem der vorherigen Ansprüche, wobei die Segmente nebeneinander (12, 14, 15) im Wesentlichen in einer Ebene aneinander angrenzend angeordnet sind.

11. Sensorelement nach einem der vorherigen Ansprüche, wobei die Segmente (12, 14, 15) übereinander im Wesentlichen aneinander angrenzend angeordnet sind.

12. Sensorelement nach einem der Ansprüche 8-11, wobei zumindest eines des zweiten oder dritten Segments (13,12,14, 15) eine Phasenübergangstemperatur in einem für die Validierung, Justierung, Kalibrierung und/oder Eichung des Sensorelements relevanten Bereich aufweist.

13. Sensorelement nach einem der Ansprüche 8-12 wobei (sich das zweite und das dritte Segment (13, 12, 14, 15) hinsichtlich ihrer Beschaffenheit unterscheiden, insbesondere aus unterschiedlichen Materialien bestehen, eine unterschiedliche Stärke und/oder Breite bzw. Dicke aufweisen.

14. Sensorelement nach einem der Ansprüche 1-7, wobei die erste Messstrecke zur Bestimmung der Temperatur anhand eines temperaturabhängigen Widerstandselements dient, und die zweite Messstrecke aus zumindest zwei aneinander grenzenden zweiten Segmenten (13, 12, 14, 15) besteht, welche Segmente (13, 12, 14, 15), bevorzugt aus unterschiedlichen Materialien bestehen, wobei zumindest eines der Segmente (13,12, 14, 15) eine Phasenübergangstemperatur in einem für die Validierung, Justierung, Kalibrierung und/oder Eichung der erste Messtrecke, d.h. des temperaturabhängigen Widerstandselements, relevanten Bereich aufweist.

15. Thermometer umfassend ein Sensorelement nach einem der vorherigen Ansprüche.

16. Verfahren zur Bestimmung einer Temperatur, wobei eine erste Messstrecke über ein erstes Segment verläuft, das aus einem ersten Material besteht,
wobei eine zweite Messstrecke zumindest teilweise über das erste Segment verläuft, und wobei die zweite Messstrecke zudem über ein zweites Segment verläuft, welches aus einem zweiten Material besteht, das sich von dem ersten Material unterscheidet,
wobei das Material, aus dem das zweite Segment (2) besteht, bei einer vorgegebenen Temperatur eine Phasenumwandlung erfährt, und
wobei durch die Phasenumwandlung das zweite Material von einem Zustand in welchem das zweite Material elektrisch im Wesentlichen isoliert in einen elektrisch leitfähigen Zustand übergeht,
wobei ein erstes Messsignal über der ersten Messstrecke abgegriffen wird, und
wobei ein zweites Messsignal über der zweiten Messstrecke abgegriffen wird.

17. Verwendung des Verfahrens nach Anspruch 16 zur Validierung, Kalibrierung, Justierung und/oder Eichung eines Thermometers nach Anspruch 15.

## Claims

1. Sensor element, wherein the sensor element comprises a first and a second measuring section, wherein the first measuring section extends via a first segment (1), which is made from a first material, and the second measuring section extends at least partially via this first segment (1) made from the first material,
wherein the second measuring section also extends via a second segment (2), which is made from a second material, wherein said second material differs from the first material, wherein the material the second segment (2) is made from experiences a phase transformation at a predefined temperature, and
wherein, as a result of the phase transformation, the second material passes from a state in which the second material is essentially electrically isolated to an electrically conductive state.

2. Sensor element as claimed in one of the previous claims,
wherein the first material is platinum or a material containing platinum.

3. Sensor element as claimed in one of the previous claims,
wherein the second material is a transition metal, preferably vanadium or a vanadium oxide, or a material containing a transition metal, preferably a vanadium or a vanadium oxide.

4. Sensor element as claimed in one of the previous claims,
wherein the first and second measuring section are on the same substrate (3).

5. Sensor element as claimed in one of the previous claims,
wherein the first segment (1) and the second segment (2) are a thin-film layer or a thick-film layer.

6. Sensor element as claimed in one of the previous claims,
wherein the first and second segment (1, 2) are adjacent to one another.

7. Sensor element as claimed in one of the previous claims,
wherein the first measuring section is formed by a first resistance tap (4, 6) and the second measuring section is formed by a second resistance tap (5, 7, 9).

8. Sensor element as claimed in one of the previous claims,
wherein a third measuring section is provided, which extends, at least partially, via the first and/or the second measuring section or the first and/or the second segment (12, 13), wherein the third measuring section additionally extends at least via a third segment (14, 15), said third segment (14, 15) being made from a third material, said third material being different from the first and/or the second material.

9. Sensor element as claimed in one of the previous claims,
wherein the third segment (14, 15) differs from the second segment in terms of the doping of the third material, its strength and/or its width.

10. Sensor element as claimed in one of the previous claims,
wherein the segments (12, 14, 15) are arranged beside one another, essentially on one plane adjacent to one another.

11. Sensor element as claimed in one of the previous claims,
wherein the segments (12, 14, 15) are arranged on top of one another, essentially in a manner in which they are adjacent to one another.

12. Sensor element as claimed in one of the Claims 8 to 11,
wherein at least one of the second or third segments (13, 12, 14, 15) has a phase transition temperature in an area that is relevant for the validation, adjustment, calibration and/or official verification of the sensor element.

13. Sensor element as claimed in one of the Claims 8 to 12,
wherein the second and third segment (13, 12, 14, 15) are different from one another in terms of their properties, are, in particular, made from different materials, and are different in terms of strength and/or width or thickness.

14. Sensor element as claimed in one of the Claims 1 to 7,
wherein the first measuring section is used to determine the temperature using a temperature-dependent resistance element, and the second measuring section consists of at least two adjacent second segments (13, 12, 14, 15), said segments (13, 12, 14, 15) preferably consisting of different materials, wherein at least one of the segments (13, 12, 14, 15) has a phase transition temperature in an area that is relevant for the validation, adjustment, calibration and/or official verification of the first measuring section, i.e. of the temperature-dependent resistance element.

15. Thermometer comprising a sensor element as claimed in one of the previous claims.

16. Procedure for determining a temperature, wherein a first measuring section extends via a first segment which is made from a first material,
wherein a second measuring section at least partially extends via the first segment, and wherein the second measuring section additionally extends via a second segment, which is made from a second material that is different from the first material
wherein the material that the second segment (2) is made from experiences a phase transformation at a predefined temperature, and
wherein, as a result of the phase transformation, the second material passes from a state in which the second material is essentially electrically isolated to an electrically conductive state,
wherein a first measuring signal is captured via the first measuring section, and a second measuring signal is captured via the second measuring section.

17. Application of the procedure as claimed in Claim 16 for the validation, calibration, adjustment and/or official verification of a thermometer as claimed in Claim 15.

## Revendications

1. Élément capteur comprenant un premier et un deuxième tronçon de mesure, le premier tronçon de mesure s'étendant via un premier segment (1) constitué d'un premier matériau et le deuxième tronçon de mesure s'étendant au moins partiellement via ce premier segment (1) constitué du premier matériau,
le deuxième tronçon de mesure s'étendant en outre via un deuxième segment (2), lequel est constitué d'un deuxième matériau, lequel deuxième matériau se distingue du premier matériau, le matériau composant le deuxième segment (2) subissant un changement de phase à une température prédéfinie, et
le deuxième matériau, du fait du changement de phase, passant d'un état dans lequel le deuxième matériau est isolé électriquement dans un état conducteur électriquement.

2. Élément capteur selon l'une des revendications précédentes,
pour lequel il s'agit, concernant le premier matériau, de platine ou d'un matériau contenant du platine.

3. Élément capteur selon l'une des revendications précédentes,
pour lequel il s'agit, concernant le deuxième matériau, d'un métal transitoire, de préférence du vanadium ou un oxyde de vanadium, ou d'un matériau contenant un métal transitoire, de préférence contenant du vanadium ou un oxyde de vanadium.

4. Élément capteur selon l'une des revendications précédentes,
pour lequel le premier et le deuxième tronçon de mesure s'étendent sur le même substrat (3).

5. Élément capteur selon l'une des revendications précédentes,
pour lequel il s'agit, concernant le premier segment (1) et concernant le deuxième segment (2), d'une couche de film mince ou d'une couche de film épais.

6. Élément capteur selon l'une des revendications précédentes,
pour lequel le premier et le deuxième (1, 2) se jouxtent.

7. Élément capteur selon l'une des revendications précédentes,
pour lequel le premier tronçon de mesure est formé par une première prise de mesure de résistance (4, 6) et le deuxième tronçon de mesure est formé par une deuxième prise de mesure de résistance (5, 7, 9).

8. Élément capteur selon l'une des revendications précédentes,
pour lequel est prévu un troisième tronçon de mesure, qui s'étend au moins partiellement via le premier et/ou le deuxième tronçon de mesure, ou le premier et/ou le deuxième segment (12, 13), le troisième tronçon de mesure s'étendant en outre via au moins un troisième segment (14, 15), lequel troisième segment est constitué d'un matériau, lequel troisième matériau se distingue du premier et/ou du deuxième matériau.

9. Élément capteur selon l'une des revendications précédentes,
pour lequel le troisième segment (14, 15) se distingue du deuxième segment concernant le dopage du troisième matériau, son épaisseur et/ou sa largeur.

10. Élément capteur selon l'une des revendications précédentes,
pour lequel les segments sont disposés côte à côte (12, 14, 15), pour l'essentiel se jouxtant dans un plan.

11. Élément capteur selon l'une des revendications précédentes,
pour lequel les segments (12, 14, 15) sont superposés, pour l'essentiel en se jouxtant.

12. Élément capteur selon l'une des revendications 8 à 11,
pour lequel l'un parmi le deuxième ou le troisième segment (13, 12, 14, 15) présente une température de changement de phase dans une zone pertinente pour la validation, l'ajustage, le calibrage et/ou l'étalonnage de l'élément capteur.

13. Élément capteur selon l'une des revendications 8 à 12,
pour lequel le deuxième et le troisième segment (13, 12, 14, 15) se distinguent concernant leur constitution, se composent notamment de matériaux différents et présentent une épaisseur et/ou une largeur différentes.

14. Élément capteur selon l'une des revendications 1 à 7,
pour lequel le premier tronçon de mesure sert à la détermination de la température au moyen d'un élément résistif dépendant de la température, et le deuxième tronçon de mesure est constitué au moins de deux deuxièmes segments (13, 12, 14, 15) avoisinants, lesquels segments (13, 12, 14, 15) sont constitués de préférence de matériaux différents, au moins l'un des segments (13, 12, 14, 15) présentant une température de changement de phase dans une zone pertinente pour la validation, l'ajustage, le calibrage et/ou l'étalonnage du premier tronçon de mesure, c'est-à-dire de l'élément résistif dépendant de la température.

15. Thermomètre comprenant un élément capteur selon l'une des revendications
précédentes.

16. Procédé destiné à la détermination d'une température, un premier tronçon de mesure s'étendant via un premier segment, lequel est constitué d'un premier matériau,
un deuxième tronçon de mesure s'étendant au moins partiellement via le premier segment (1) et le deuxième tronçon de mesure s'étendant en outre via un deuxième segment, lequel est constitué d'un deuxième matériau, qui se distingue du premier matériau
le matériau composant le deuxième segment (2) subissant un changement de phase à une température prédéfinie, et
le deuxième matériau, du fait du changement de phase, passant d'un état dans lequel le deuxième matériau est isolé électriquement dans un état conducteur électriquement,
un premier signal de mesure étant prélevé via le premier tronçon de mesure et un deuxième signal de mesure étant prélevé via le deuxième tronçon de mesure.

17. Utilisation du procédé selon la revendication 16 en vue de la validation, du calibrage, de l'ajustage et/ou de l'étalonnage d'un thermomètre selon la revendication 15.
